# EUROPEAN PATENT APPLICATION

(11) **EP 0 958 988 A2**
(43) Date of publication of application: **24.11.1999**
(21) Application number: 99850082.1
(22) Date of filing: 12.05.1999
(51) Int. Cl.: B62B 3/06

(54) **Device for increasing the supporting surface of a load fork**

(30) Priority: 18.05.1998 SE 9801785
(71) Applicant: BT Industries Aktiebolag, S-59581 Mjölby (SE)
(72) Inventor: Johansson, Rune, 595 34 Mjölby (SE); Moborg, Fredrik, 595 32 Mjölby (SE)
(74) Representative: Berglund, Erik Wilhelm

(57) **Abstract**

Device at a load fork (4) of an industrial truck or the like. The load fork (4) comprises support units (14) with horizontal upwards directed support surfaces (15) arranged at a carrying part (5) moveable between a position retracted against the carrying part (5) and a position extended from the carrying part (5). The support units (14) are connected with a control means (22) that can be influenced for achievement of the movement.

## Description

The invention concerns a device at a load fork in accordance with the preamble of the claim 1. The invention also concerns an industrial truck and a hand pallet truck provided with said load fork.

### Prior art

Today it is usual with hand pallet trucks and industrial trucks of different sizes with two parallel load forks. These load forks are sometimes also in their outer end provided with support wheels and can lift a load a few decimeters off the ground. The presence of the support wheels require that the intended load locally has a ground clearance where the load fork can be inserted.

It is sometimes difficult to handle narrow or high loads since they get a comparatively small contact area against the load fork and therefor easily get unstable and thus risk to tilt laterally. This is primarily the case for loads that for one reason or the other only can be lifted by one load fork. Nor can the load forks be made too broad since this would require a broader "clearance tunnel" at the load where the fork can be inserted, and since they generally become more cumbersome. There exist today on the market a number of solutions where the load in some way via additional devices are held on the forks, for instance the use of locking hooks and straps or the like.

There are further types of loads where the stability in itself may be good but where the parts in the area above "the clearance tunnel" are not suited to support the entire load, for instance due to structural reasons.

### Object of the invention

The object of the invention is to achieve a load fork that without requiring more space can have a larger distance between (and possibilities of variation of) different load carrying areas in order to achieve safer and more stable load handling, where the load fork and the truck or the like on which it is arranged can be designed in a functional, ergonomic, cost efficient and reliable optimal way.

### Brief statement of the invention

The object of the invention is achieved with a device in accordance with the characterizing part of claim 1. The device enables the fork to be inserted below the load, then inventive support units are extended and a broader contact with the bottom of the load is obtained. It is further possible for the load to be carried by the support units only and not at all by the carrying part in itself. Furthermore no increase in the "clearance tunnel" is required in relation to traditional solutions.

The claims 2 - 8 define preferred embodiments with a stable and safe solution with a relatively simple construction as a result.

By a device according to claim 6 a relatively simple and at the same time mechanical extending of the support units is made possible. A device according to claim 7 enables automatic extending when the load fork is inserted below the load that is pressed against the control means.

The claims 9, 10 define preferable embodiments on industrial trucks and hand pallet trucks.

The further characteristics and advantages of the invention are apparent from the following described preferred embodiment with reference to the enclosed figures.

### List of figures

Fig 1 shows a schematic view of a hand pallet truck provided with a load fork in accordance with the invention.

Figure 2 shows a schematic view of a load fork part with support units in their retracted position.

Figure 3 shows a schematic view of a load fork part with support units in their extended position.

### Description of an embodiment

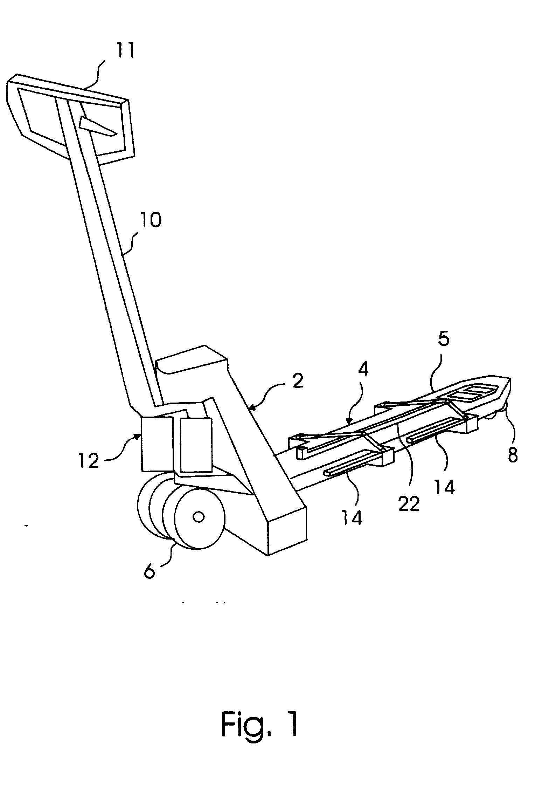

Figure 1 shows a hand pallet truck that is provided with a load fork 4 in accordance with the invention. The load fork 4 includes a carrying part 5 and in its outer end a support wheel arrangement 8. The load fork is at the inner end connected to the lifting part 2 of the pallet truck. At the lifting part 2 a steerable wheel pair 6 and a hydraulic lifting mechanism 12 are arranged. The wheels 6 are directly connected with a manoeuvering arm 10 with a handle 11. The design of the pallet truck in itself constitute common technique, while the invention is constituted by the modified load fork, which is described below.

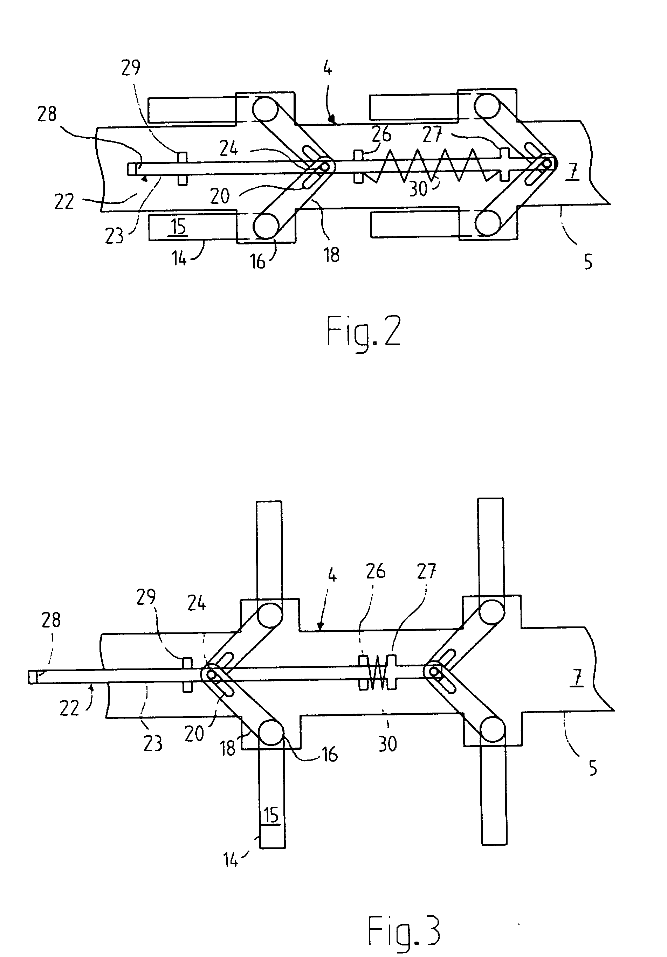

At the carrying part 5 of the load fork four support units 14 are arranged. Each support unit is moveable between a position retracted against the carrying part 5 (see figure 2) and a position extended from the carrying part (see figure 3). A control means 22 controls the movement between the two positions.

From the figures 2 and 3 is apparent that the carrying part 5 here is provided with four elongate support units 14 with support areas 15 facing upward, which advantageously lies essentially in the same horizontal plane as the upper surface 7 of the carrying part. The support units are extended in pairs in each of the cross directions relative the carrying part 5. The support units 14 are each connected to a vertical screw 16 and pivotable with this in a respective protruding part 32 of the carrying part 5. In the figures 2 and 3 the outer end of the load fork is to the right and for reasons of clarity only one of several corresponding components is provided with a reference number in the figures.

At the carrying part 5 a control means 22 is arranged. The control means 22 includes a rod element 23 that is axially moveable relative the carrying part 5 in its longitudinal direction and provided with two upwards extending pins 24. The axial movement is guided by guide elements 26, 29 of the carrying part. The pins 24 cooperates with elongate recesses or holes 20 in one end of a link arm 18 that in its other end is connected to the screw 16. Both the link arm 18 and the support unit 14 are rigidly fixed to the screw 16 preventing relative movement between them. The rod element 23 is influenced against the position shown in figure 2 with retracted support units 14 by means of a spring 30 compressed between a bracket 27 fastened on the rod and a bracket 26 fastened to the carrying part. The inner end of the rod element is angled upwards with a contact surface 28 (for the front side of the load).

When a load is to be lifted the operator rolls the pallet truck in under the load. When the load fork is almost entirely inserted some part of the load will press against the contact surface 28. The rod element 23 will then be pressed from the position shown in figure 2 to that shown in figure 3 pivoting the support units 14 by means of the link mechanism 16, 18, 24 to their extended positions.

The invention can within the frame of the patent claims be executed in accordance with a number of alternative embodiments other than the above shown. The invention can be used on other devices than hand pallet trucks, for instance industrial trucks of different kinds. Further the invention is not limited to the use of only one load fork as in the above described embodiment. The stability problem is however particularly present at the handling of loads that for some reason is to be lifted by only one load fork, why the invention is particularly advantageous in these cases.

The design of the support units can be varied in a number of ways, they can for instance move straight laterally instead of by pivoting as in this example. Their placing and related orientation can also be varied. It may for certain applications be appropriate to provide the carrying part with protection or changed design to prevent the support units units from being damaged by bumping into something. At certain applications it may be desirable to keep the top surface of the carrying part surface free, why the control mechanism then can be arranged below the carrying part.

It may in some cases be impossible to let the control means as above be activated by the load why an alternative solution may used, for instance a link connection up to the handle, the operator extending the support units when desired.

Thus the loading pallet may within the frame of the invention be adapted to the conditions existing at a specific case, as for instance the shape of the intended load and other characteristics.

## Claims

1. Device at a load fork (4) of an industrial truck or the like, which load fork (4) includes an elongate carrying part (5), **characterized in** that support units (14) with horizontal upwardly facing support surfaces (15) are arranged at the carrying part (5), that each support unit (14) is moveable between a first position retracted against the carrying part and a second position extended from the carrying part (5), and that the support units (14) are connected to a control means (22), influenceable to achieve the movement between said positions.

2. Device according to claim 1, **characterized in** that the support surfaces (15) in their extended position lies essentially in the same horizontal plane as the top surface (7) of the carrying part.

3. Device according to claim 1 or 2, **characterized in** that the support units (14) have extended positions in both the horizontal cross directions of the load fork (4).

4. Device according to any of the preceding claims **characterized in** that the support units (14) are constituted by elongate elements pivotably journaled to the carrying part around a respective vertical axis.

5. Device according to any of the preceding claims, **characterized in** that the support units (14) are pretensioned against their retracted position by means of at least one spring means (30).

6. Device according to any of the preceding claims, **characterized in** that the control means (22) includes a rod element (23) arranged axially moveable in the carrying part (5), and arranged in the length direction of the load fork (4), which rod element (23) is connected to the support units (14) via a respective link mechanism (16, 18, 24).

7. Device according to claim 6, **characterized in** that the control means (22) includes one with the rod element (23) rigidly connected contact surface (28) arranged to be brought in contact with a load with the purpose to achieve an axial movement of the rod element (23) which via the link mechanism (16, 18, 24) influence the movement of the support units (14) towards their extended position.

8. Device according to any of the preceding claims, **characterized in** that the load fork (4) includes four support units (14), two on each side arranged symmetrically relative the central length axis of the load fork (4).

9. Industrial truck, **characterized in** the presence of at least one load fork according to any of the preceding claims, where the load fork in its outer end is provided with a support wheel arrangement.

10. Hand pallet truck, **characterized in** the presence of at least one load fork (4) according to any of the claims 1-8, where the load fork (4) in its outer end is provided with a support wheel arrangement (8).
